Europäisches Patentamt

European Patent Office

Office européen des brevets

(11) Numéro de publication: **0 210 090**
A1

(12) **DEMANDE DE BREVET EUROPEEN**

(21) Numéro de dépôt: 86401340.4

(22) Date de dépôt: 18.06.86

(51) Int. Cl.⁴: **H 02 K 11/00**
H 02 K 9/06, H 02 K 19/36

(30) Priorité: 24.06.85 FR 8509557

(43) Date de publication de la demande:
28.01.87 Bulletin 87/5

(84) Etats contractants désignés:
DE GB IT

(71) Demandeur: DUCELLIER ET CIE
3/5 Voie Félix Eboué
F-94000 Creteil(FR)

(72) Inventeur: Davoigneau, Daniel
103, rue d'Epinal
F-77920 Mitry-le-Neuf(FR)

(72) Inventeur: Lefrancois, Philippe
2, Allée J. Lalande
F-94000 Creteil(FR)

(74) Mandataire: Martin, Jean-Jacques et al,
Cabinet REGIMBEAU 26, Avenue Kléber
F-75116 Paris(FR)

(54) Alternateur pour véhicules automobiles ou analogues.

(57) L'alternateur est remarquable en ce que en vis-à-vis des ouvertures de ventilation (10) ménagées sur le flasque arrière (7), sosnt montés un premier (11) et un deuxième (12) elément redresseur électrique. Le premier élément redresseur électrique (11) est directement en contact avec le flasque arrière (7). Le deuxième élément redresseur électrique (12), isolé du premier élément redresseur (11), est empilé sur le premier élément redresseur (11) selon une direction parallèle à l'axe (1) de l'alternateur, mais décalé par rapport à celui-ci, perpendiculairement à l'axe de l'arbre (1).

Application aux alternateurs automobiles ou véhicules industriels.

FIG. 2a

ALTERNATEUR POUR VEHICULES AUTOMOBILES OU ANALOGUES.

La présente invention est relative à un alternateur pour moyen de locomotion ou analogue mettant en oeuvre un agencement particulier d'éléments redresseurs capables de fournir l'énergie électrique sous forme de tension électrique continue.

Actuellement dans les véhicules automobiles ou analogues, l'alimentation en énergie électrique est effectuée en basse tension continue à partir d'un alternateur auquel sont couplés des éléments redresseurs capables de fournir l'énergie électrique nécessaire au fonctionnement du véhicule par l'intermédiaire d'une batterie d'accumulateurs tampon.

Afin d'améliorer les conditions de fonctionnement des éléments redresseurs, et notamment le rendement du redressement, il est nécessaire d'obtenir un refroidissement convenable de l'ensemble des diodes des éléments redresseurs. Ce problème apparaît également dans le cas où les alternateurs sont des alternateurs triphasés dans lesquels le branchement des enroulements stator est un branchement étoile dans lequel un redressement supplémentaire des composantes harmoniques est effectué entre le point neutre et le point de tension de référence afin d'assurer une récupération de l'énergie produite par le fonctionnement de l'alternateur en régime déséquilibré. Dans ce cas en effet, le nombre de diodes étant augmenté à huit, la chaleur dissipée par les éléments de redressement doit être évacuée de manière satisfaisante afin de maintenir le gain de rendement du système de redressement dû à la présence des deux diodes supplémentaires.

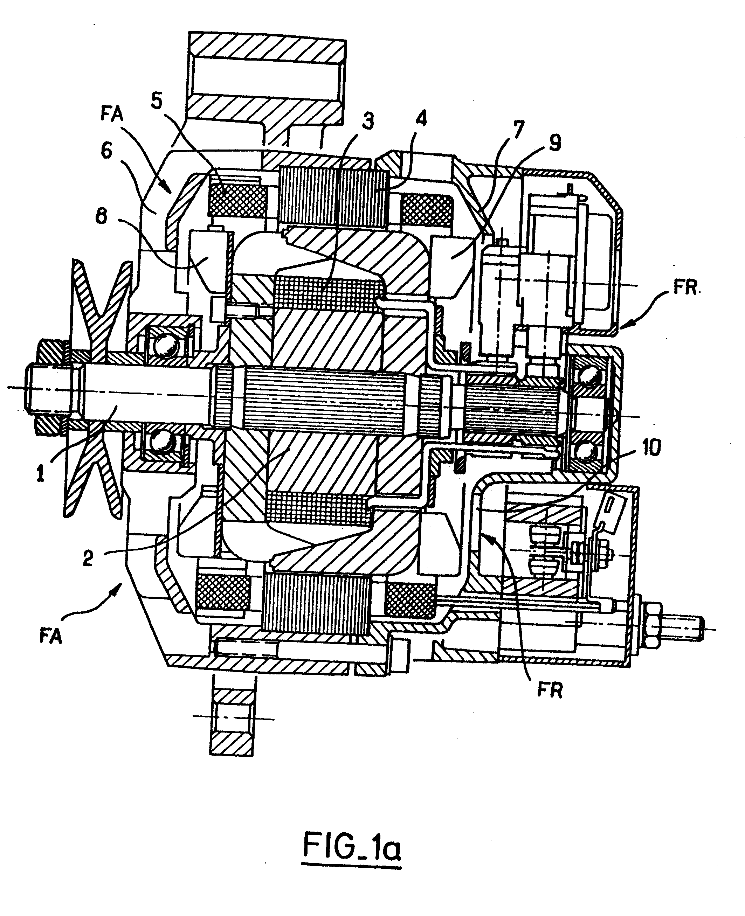

Dans les systèmes utilisés actuellement, les éléments redresseurs sont soit groupés ensemble ainsi que représenté en figure 1a, soit montés directement sur des plaques frontales au flux d'air de refroidissement ainsi que décrit dans la demande de brevet européen EP 0 030 725. L'agencement tel que décrit dans cette demande de brevet présente notamment l'inconvénient de nécessiter la mise en oeuvre de plaques, sur lesquelles sont montés les éléments redresseurs, de grandes dimensions et en tout cas de dimensions très supérieures aux dimensions correspondantes des ouvertures de ventilation ménagées dans le flasque arrière de l'alternateur.

La présente invention a pour but de remédier aux inconvénients précités par la mise en oeuvre d'un agencement particulier d'éléments redresseurs pour lesquels le refroidissement est amélioré.

Un autre but de la présente invention est la mise en oeuvre d'un alternateur pour véhicule ou analogue dont les performances et notamment le rendement des redresseurs est amélioré et maintenu sensiblement sur la totalité de la plage de fonctionnement en vitesse de rotation d'entraînement de l'alternateur.

Un autre but de la présente invention est en outre la mise en oeuvre d'un alternateur dans lequel du fait de l'agencement particulier des éléments redresseurs une réduction de l'encombrement est obtenue.

L'alternateur pour véhicule ou analogue selon l'invention est remarquable en ce que en vis-à-vis des ouvertures de ventilation ménagées sur le flasque arrière sont montés un premier et un deuxième élément redresseur électrique. Le premier élément redresseur électrique consiste en un bloc métallique, sur lequel est monté un premier jeu de diodes de redressement, directement en contact avec le flasque arrière. Le deuxième élément redresseur électrique, isolé du premier élément redresseur, est constitué également par un bloc métallique sur lequel est monté un deuxième jeu de diodes de redressement. Le deuxième élément redresseur est empilé sur le premier élément redresseur selon une direction parallèle à l'axe de l'alternateur mais décalé par rapport à celui-ci selon une direction perpendiculaire à l'axe de l'arbre de l'alternateur de façon à soumettre les deux éléments de redressement successivement au flux d'air entrant.

L'invention sera mieux comprise à la lecture de la description et à l'observation des dessins ci-après dans lesquels :

- la figure 1a représente une vue en coupe selon un plan longitudinal passant par l'axe de l'arbre du rotor d'un alternateur classique,
- la figure 1b représente une vue de face du flasque arrière d'un alternateur selon la figure 1a dans lequel les éléments redresseurs,otés, ont été représentés en traits mixtes,
- la figure 2a représente une vue de face du flasque arrière d'un alternateur pourvu d'un agencement d'éléments redresseurs conformément à la présente invention,
- la figure 2b représente une vue, en éclaté, de la description relative de l'agencement des éléments redresseurs conformément à la présente invention,
- la figure 3a représente une vue de face de l'agencement des éléments redresseurs sur le flasque arrière de l'alternateur,
- la figure 3b représente, en vue de dessous, de la figure 3a le même agencement des éléments redresseurs dans lequel le premier élément redresseur a été ôté afin de mieux révéler la structure du deuxième élément redresseur,
- la figure 4 représente un détail de réalisation particulier relatif à la fixation du deuxième élément redresseur sur le premier.

Ainsi que représenté en figure 1a, un alternateur pour véhicule comprend un arbre mené 1, des circuits magnétiques 2 de rotor fixés sur l'arbre et des bobinages de rotor 3 enroulés autour des circuits magnétiques 2. Des circuits magnétiques 4 constituent le stator et sont disposés autour du rotor. Des bobinages 5 de stator sont enroulés autour des circuits magnétiques 4. L'ensemble constitué par le stator et le rotor est enfermé dans des flasques métalliques avant 6 et arrière 7 formant la structure extérieure rigide de l'alternateur. De manière générale le rotor est pourvu aux extrémités de ces circuits magnétiques d'ailettes 8, 9 formant une paire de ventilateurs de refroidissement. En fonctionnement, les ventilateurs aspirent un flux d'air de refroidissement noté en ce qui concerne le flux d'air avant FA et, en ce qui concerne le flux d'air arrière noté FR sur la figure 1a. Les flux d'air de refroidissement FA et FR pénètrent dans l'alternateur au niveau d'ouvertures de ventilation 10 ménagées dans les flasques avant et arrière principalement. Par alternateur pour véhicule on entend en fait un type d'alternateur auquel est associé un ou plusieurs redresseurs permettant à partir de la tension alternative délivrée par l'alternateur lui-même d'engendrer une tension continue susceptible d'alimenter en énergie électrique tout type d'installation tel que par exemple les circuits électriques d'une automobile, de véhicules industriels ou analogues.

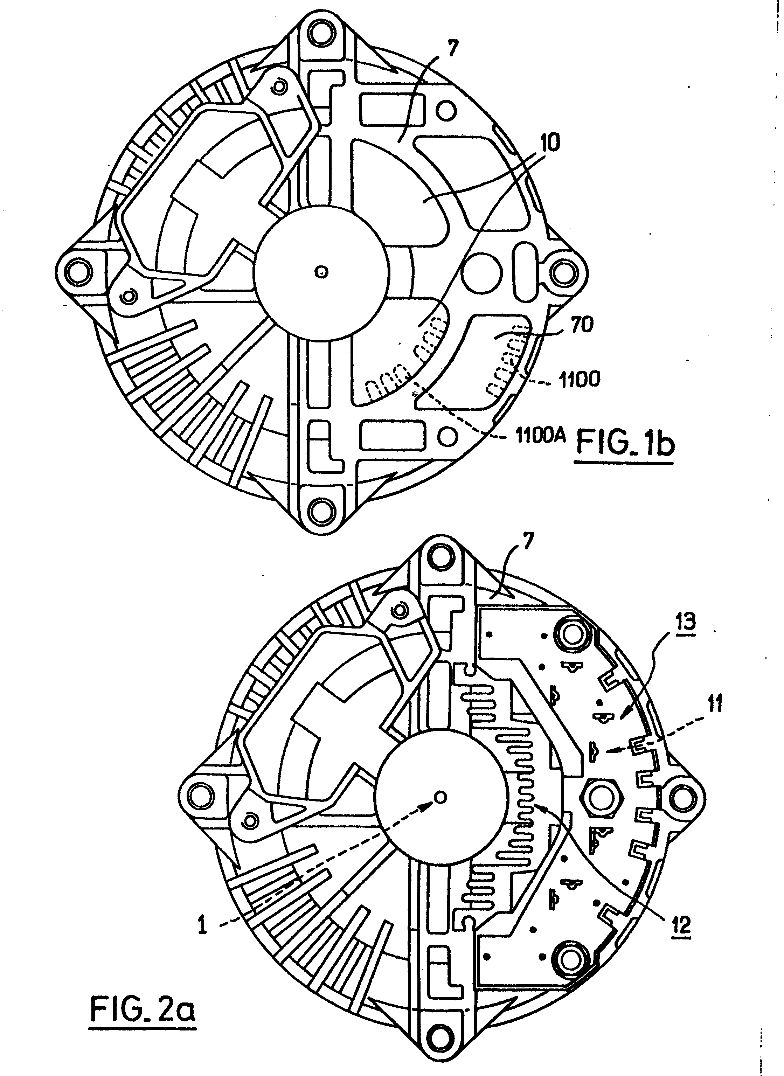

Sur la figure 1b représentant une vue de face du flasque arrière 7 de l'alternateur sont représentées en particulier les ouvertures de ventilation 10. Ainsi qu'il apparaît en outre en figure 2a, en vis-à-vis des ouvertures 10 de ventilation du flasque arrière 7 sont montés un premier élément redresseur électrique 11 et un deuxième élément redresseur électrique 12. Le premier élément redresseur électrique 11 consiste en un bloc métallique sur lequel est monté un premier jeu de diodes de redressement. Le bloc métallique constituant le premier élément redresseur 11 est monté directement en contact électrique et mécanique avec le flasque arrière 7. Sur la figure 2a, la flèche en pointillé reliée à la référence 11 indique que le premier élément redresseur électrique 11 se trouve situé en dessous du deuxième élément redresseur électrique 12. Le deuxième élément redresseur électrique 12 est isolé électriquement du premier élément redresseur 11. Un deuxième jeu de diodes de redressement est en outre monté sur le deuxième élément redresseur électrique 12. Ainsi, le deuxième élément redresseur électrique 12 est empilé sur le premier élément redresseur électrique 11 selon une direction parallèle à l'axe de l'arbre 1 de l'alternateur. En outre, conformément à l'invention, le deuxième élément redresseur 12 est décalé par rapport au premier élément redresseur 11 selon une direction perpendiculaire à l'axe de l'arbre mené 1 de l'alternateur. Ce décalage, a pour effet de soumettre les deux éléments redresseurs 11 et 12 successivement au flux d'air entrant FR, ainsi qu'il sera décrit ci-après.

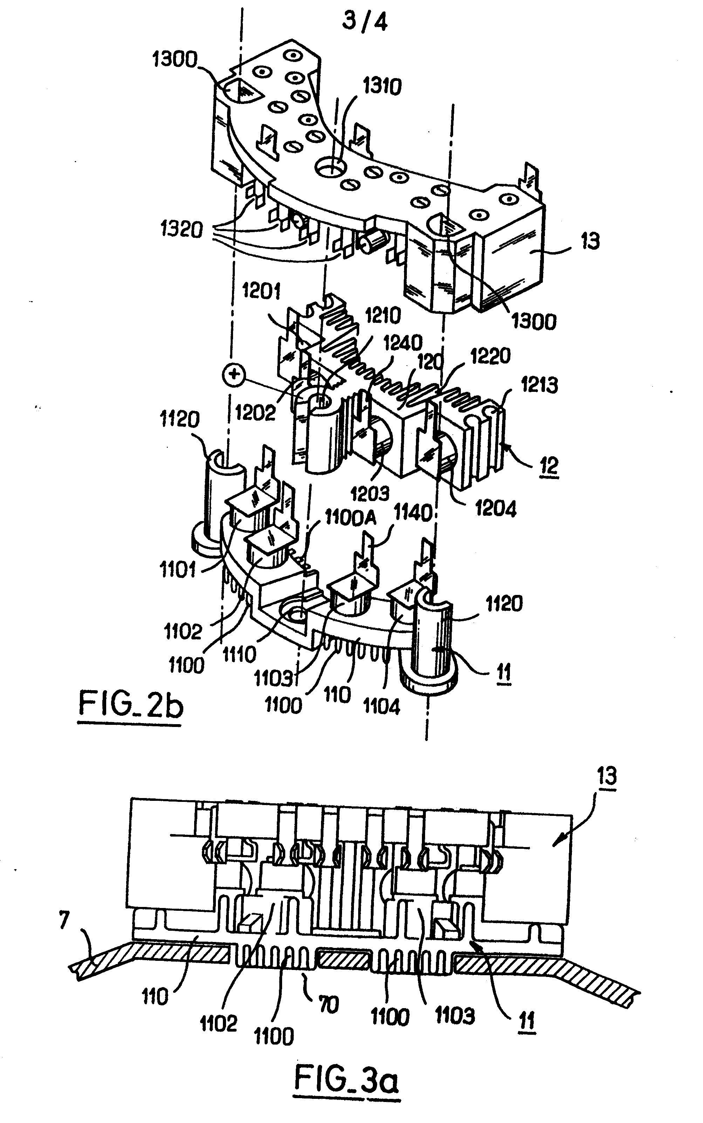

On a pu remarquer notamment en liaison avec la figure 1b que les ouvertures de ventilation 10 du flasque arrière 7 étaient sensiblement en forme de secteur circulaire. Afin d'adapter la forme des éléments redresseurs 11 et 12 à celle des ouvertures de ventilation 10, ainsi que représenté de manière non limitative en figure 2b, le bloc métallique 110 constituant le premier élément redresseur 11 est sensiblement en forme de couronne circulaire. La couronne circulaire constituant le bloc métallique 110 est montée sur le fasque arrière 7 à la périphérie extérieure des ouvertures 10 sensiblement.

Ainsi qu'il apparaît en outre en figure 2b, le bloc métallique 110 constituant l'élément redresseur 11 comporte des parties saillantes référencées 1100, 1100 A, formant radiateur. Les parties saillantes constituent en fait les ailettes du radiateur et sont engagées dans la périphérie d'ouvertures 10 d'entrée d'air FR ménagées au voisinage des ouvertures de ventilation dans l'épaisseur du flasque arrière 7. Les ouvertures précitées permettent le passage des ailettes ou parties saillantes 1220 du bloc métallique 120 afin que celles-ci soient soumises au flux d'air FR. Sur la figure 2b, on a représenté le bloc métallique 110 muni d'éléments de fixation constitués par des colonnettes 1120. En outre, un élément de fixation constitué par une perforation centrale 1110 est prévu sensiblement au niveau du plan de symétrie de la couronne circulaire. Les diodes de redressement référencées 1101, 1102, 1103, 1104 sont montées directement sur la surface plane de la couronne circulaire. A titre d'exemple non limitatif le premier élément redresseur 11 constitue l'élément redresseur dit négatif, l'anode des diodes 1101 à 1104 étant montée directement en contact mécanique et électrique avec la partie plane du bloc métallique 110. Les diodes 1102, 1101, 1103, 1104 constituent un premier jeu de diodes. Le bloc métallique 110 peut être constitué par un bloc d'aluminium moulé aux formes et aux dimensions appropriées pour le type d'alternateur considéré.

Ainsi qu'il apparaît en outre en figure 2b, le bloc métallique 120 constituant le deuxième élément redresseur 12 est empilé sur le premier élément redresseur et en particulier sur le bloc métallique 110. L'empilement est effectué par l'intermédiaire de moyens de fixation 1210 proéminents par rapport au corps du bloc métallique 120 constituant le deuxième élément redresseur 12 et

destinés à être disposés directement en vis-à-vis des moyens de fixation 1110 constitués par le trou central du bloc métallique référencé 110. Le deuxième élément redresseur 12 est ainsi décalé par rapport au premier élément redresseur 11 selon une direction perpendiculaire à l'axe de l'arbre mené 1.

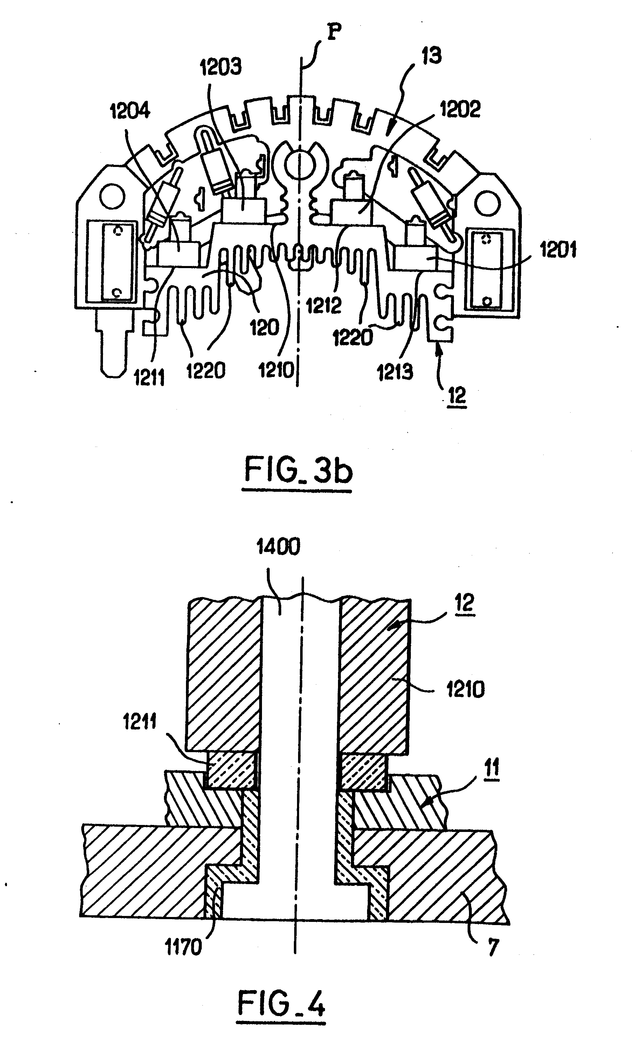

Une variante de réalisation des éléments redresseurs 11 et 12 et de leur agencement relatif sera maintenant décrite en liaison avec les figures 3a et 3b. Selon la figure 3a, le bloc métallique 110 du premier élément redresseur 11 comporte des parties saillantes 1100 lesquelles sont engagées dans des ouvertures 70 ménagées notamment sur la périphérie du flasque arrière 7. Sur la figure 3a, on peut constater en particulier que le bloc métallique 110 constituant le premier élément redresseur 11 est sensiblement plan et directement mis en contact avec le flasque arrière 7. Conformément à la figure 3b, laquelle représente une vue de dessous de la figure 3a dans laquelle, bien entendu, le flasque arrière 7 et le premier élément redresseur 110 ont été ôtés, le deuxième élément redresseur 12 est formé par un profilé d'aluminium dont la section présente par rapport à un plan de symétrie longitudinale noté P une série de plateaux dégradés notés 1210, 1211, 1212, 1213. Sur ces plateaux sont montés les diodes 1201, 1202, 1203, 1204 constituant un deuxième jeu de diodes. On pourra constater que la série de plateaux dégradés permet de recouvrir sensiblement les ouvertures de ventilation 10 ménagées sur le flasque arrière 7. En outre, afin d'assurer une meilleure ventilation du deuxième élément redresseur 12 la face du profilé opposée à celle comportant les plateaux dégradés est munie de parties saillantes 1220 formant radiateur.

Ainsi qu'on pourra le constater à l'observation des figures 3a et 3b lesquelles sont représentées dans des plans perpendiculaires, il apparaît que les parties saillantes des blocs métalliques formant le premier 11 et le deuxième élément redresseur sont constitués par des cannelures 1100 et 1220 ou lamelles dont les dimensions longitudinales relativement au premier respectivement au deuxième élément redresseur 12 sont sensiblement orthogonales. Cette disposition particulière des cannelures 1220 ou lamelles permet avantageusement de soumettre celles-ci au flux d'air arrière entrant FR, alors que la disposition particulière des cannelures 1100 permet de soumettre celles-ci au flux d'air brassé par le ventilateur 9. Sur la figure 3b on pourra constater que les diodes 1201, 1202, 1203, 1204 sont montées chacune sur un des plateaux dégradés. Le deuxième élément redresseur 12 constitue l'élément redresseur, dit positif, les diodes précitées étant montées en inverse des diodes montées sur le premier élément redresseur 11. L'existence des quatre diodes sur chacun des éléments redresseurs 11 et 12 permet un montage conformément au montage classique consistant, pour un alternateur triphasé, en une diode de redressement par élément positif et négatif et par phase, plus une diode de redressement pour chacun des éléments redresseurs positif et négatif connectés entre le point neutre du stator et chacun des éléments de redressement.

Ainsi qu'il apparaît notamment en liaison avec les figures 3a, 3b et 2b, la cohésion mécanique des premier et deuxième éléments redresseurs 11, 12 est assurée au moyen d'éléments de fixation propres au premier et au deuxième élément redresseur. Ces éléments de fixation sont par exemple constitués en ce qui concerne le deuxième élément redresseur 12 par l'élément de fixation 1210 déjà cité et par des échancrures du type mortaise 1213 ménagées sur la partie latérale du bloc métallique 120 constituant le deuxième élément redresseur. En outre, une pièce rapportée 13 en matériau isolant est directement empilée sur le deuxième élément redresseur 12. La pièce rapportée 13 est engagée mécaniquement avec les éléments de fixation précités. Elle comporte en elle-même des éléments de fixation consistant respectivement en un orifice central 1310 directement aligné avec les moyens de fixation 1210 du deuxième élément redresseur 12 et le moyen de fixation 1110 ou trou central du premier élément redresseur 11. Après empilement du premier élément redresseur 11 lequel est placé sur le flasque arrière 7, du deuxième élément redresseur 12 dont le moyen de fixation 1210 est directement placé en vis-à-vis du moyen de fixation ou trou central 1110 du premier élément redresseur 11 et de la pièce rapportée 13 en matériau isolant, des moyens d'ancrage tels que par exemple des systèmes à boulon et à écrou sont engagés dans les moyens de fixation 1300 de la pièce rapportée 13, et les colonnettes 1120 du premier élément redresseur 11 puis dans le trou central 1310 de la pièce rapportée 13, le moyen de fixation 1210 de l'élément redresseur 12 et de l'élément de fixation 1110 ou trou central du premier élément redresseur 11. La pièce rapportée 13 est par exemple constituée en un matériau isolant tel que un matériau plastique ou du polytétrafluoréthylène ou analogue. Ce mode de réalisation présente l'avantage en particulier de supprimer toute connexion par fil entre la pièce rapportée et les éléments redresseurs 12,11 la pièce rapportée étant constituée en élément porte-connexions lequel réalise toutes les liaisons nécessaires pour le redressement et les liaisons extérieures (fils stator, languettes Ex, B+, W).

On pourra constater en particulier que l'agencement tel que décrit précédemment au moyen des figures 2a, 2b et 3a, 3b présente l'avantage d'une structure homogène après montage, laquelle présente une bonne résistance aux vibrations mécaniques inévitables du fait de la présence des parties tournantes de l'alternateur. En particulier, on remarquera que la quasi totalité ou la totalité des connexions entre les premier élément redresseur 11 et deuxième élément redresseur 12 et élément porte-connexions 13 peut être effectuée au moyen de cosses rigides notées 1320 en ce qui concerne l'élément porte-connexions 13, 1240 en ce qui concerne le deuxième élément redresseur 12 et 1140 en ce qui concerne le premier élément redresseur 11. Ce type de connexion, effectué par exemple par sertissage, présente l'avantage de présenter une meilleure résistance aux vibrations mécaniques, notamment pour les liaisons 1320 des fils stator. On remarquera en outre, que les moyens de fixation du type mortaise 1213 représentés sur le deuxième élément redresseur 12 peuvent consister en fait en une pluralité de mortaises élémentaires, l'une d'elles étant seulement utilisée pour la fixation ou l'ancrage de l'empilement au moyen par exemple d'un élément mâle correspondant en matériau isolant. Au contraire, la ou les autres mortaises élémentaires 1213 peuvent être utilisées afin de réaliser une sortie ou borne positive supplémentaire à partir de l'élément redresseur positif 12. Dans ce cas, la connexion peut être effectuée au moyen d'un élément mâle ou tenon correspondant, non représenté sur la figure 2b, constitué en un matériau conducteur tel que de l'aluminium.

Le système de fixation de l'ensemble des éléments redresseurs 11, 12 et de l'élément porte-connexions 13 sera décrit maintenant en liaison avec la figure 4.

Ainsi qu'il apparaît sur cette figure, après empilement des constituants précités, l'assemblage est effectué au moyen d'un système boulon-écrou représenté et référencé en figure 4 par 1400. On constatera en particulier que l'isolation électrique du deuxième élément redresseur 12 au niveau de son moyen de fixation 1210, est effectuée d'une part vis-à-vis du premier élément redresseur 11 au moyen d'une bague référencée 1211 constituée en un matériau isolant. La bague est par exemple constituée par un anneau de polytétrafluoréthylène. En outre, le boulon 1400 est lui-même isolé électriquement du flasque arrière 7 par l'intermédiaire d'un manchon noté 1170 lequel permet d'assurer un assemblage convenable de l'ensemble. Le manchon 1170 peut également être constitué en un matériau isolant tel que du polytétrafluoréthylène.

On a ainsi décrit un agencement particulier des éléments redresseurs d'un alternateur pour véhicule présentant une très grande rigidité après assemblage, et une très bonne tenue aux conditions mécaniques d'utilisation telles que les vibrations provoquées par les parties tournantes de l'alternateur et l'échauffement provoqué en fonctionnement, notamment à bas régime moteur, c'est-à-dire à bas régime de rotation de l'alternateur, par les éléments redresseurs positif et négatif.

0210090

-12-

REVENDICATIONS

1. Alternateur pour véhicule ou analogue comprenant un arbre mené (1), des circuits magnétiques (2) de rotor fixés sur ledit arbre et des bobinages (3) de rotor enroulés autour desdits circuits magnétiques (2) de rotor, des circuits magnétiques (4) de stator disposés autour du rotor et des bobinages (5) de stator enroulés autour desdits circuits magnétiques (4), des flasques métalliques avant (6) et arrière (7) formant structure extérieure rigide et entourant ledit stator et ledit rotor, ledit rotor étant pourvu aux extrémités de ses circuits magnétiques d'ailettes (8, 9) formant une paire de ventilateurs de refroidissement aspirant, en fonctionnement, un flux d'air de refroidissement (FA, FR) par des ouvertures d'admission d'air, caractérisé en ce que en vis-à-vis des ouvertures (10) du flasque arrière (7) sont montés :

- un premier élément redresseur électrique (11) consistant en un bloc métallique sur lequel est monté un premier jeu de diodes de redressement, directement en contact électrique et mécanique avec ledit flasque arrière (7),

- un deuxième élement redresseur électrique (12), électriquement isolé du premier élément redresseur et sur lequel est monté un deuxième jeu de diodes de redressement, ledit deuxième élément redresseur (12) étant empilé sur le premier élément redresseur (11) selon une direction parallèle à l'axe de l'arbre (1) mais décalé par rapport à celui-ci selon une direction perpendiculaire à l'axe de l'arbre mené (1) de façon à soumettre les deux éléments redresseurs (11, 12) successivement au flux d'air entrant (FR).

2. Alternateur selon la revendication 1, caractérisé en ce que les ouvertures de ventilation (10) du flasque arrière étant sensiblement en forme de secteurs circulaires, ledit bloc métallique constituant le premier élément redresseur (11) est sensiblement en forme de couronne circulaire, ladite couronne circulaire étant montée sur le flasque arrière (7) à la périphérie extérieure desdites ouvertures (10) sensiblement.

3. Alternateur selon la revendication 2, caractérisé en ce que la partie du flasque arrière (7) au voisinage des ouvertures de ventilation et située en vis-à-vis dudit bloc métallique (110) du premier élément redresseur (11) comporte au moins une ouverture dans laquelle des parties saillantes (1100) du bloc métallique (110), formant radiateur, sont engagées pour être soumises audit flux d'air brassé par le ventilateur.

4. Alternateur selon l'une des revendications précédentes, caractérisé en ce que le bloc métallique (120) constituant le deuxième élément redresseur (12) est formé par un profilé d'aluminium dont la section présente, par rapport à un plan de symétrie longitudinal, une série de plateaux dégradés (1210, 1211, 1212, 1213) sur lesquels sont montées les diodes du deuxième jeu de diodes de façon à recouvrir sensiblement lesdites ouvertures de ventilation.

5. Alternateur selon la revendication 4, caractérisé en ce que la face du profilé opposée à celle comportant les plateaux est munie de parties saillantes (1220) formant radiateur.

6. Alternateur selon l'une des revendications 3 à 5, caractérisé en ce que lesdites parties saillantes des blocs métalliques formant premier (11) et deuxième (12) élément redresseur sont constituées par des cannelures (1100, 1220) ou lamelles dont les dimensions longitudinales relativement au premier respectivement deuxième élément redresseur sont sensiblement orthogonales.

7. Alternateur selon l'une des revendications 1 à 6 précédentes, caractérisé en ce que la cohésion mécanique desdits premier et deuxième éléments redresseurs est assurée au moyen :

- d'éléments de fixation propres audit premier respectivement deuxième élément redresseur,

- d'une pièce rapportée (13) en matériau isolant directement empilée sur le deuxième élément redresseur (12) ladite pièce rapportée (13) étant engagée mécaniquement avec lesdits éléments de fixation.

8. Alternateur selon la revendication 7, caractérisé en ce que ladite pièce rapportée (13) constitue en outre un élément porte-connexions.

**FIG_1a**

FIG. 1b

FIG. 2a

FIG_2b

FIG_3a

FIG_3b

FIG_4

Office européen
des brevets

**0210090**

Numero de la demande

# RAPPORT DE RECHERCHE EUROPEENNE

EP  86 40 1340

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| X | PATENTS ABSTRACTS OF JAPAN, vol. 8, no. 155 (E-256)[1592], 19 juin 1984; & JP-A-59 56 856 (HITACHI SEISAKUSHO K.K.) 02-04-1984 * Abrégé; figure 4 * | 1,2,7, 8 | H 02 K  11/00 H 02 K   9/06 H 02 K  19/36 |
| X | FR-A-1 417 009  (ROBERT BOSCH) * Page 2, colonne de droite, ligne 50 - page 3, colonne de gauche, ligne 20; figures 9,10 * | 1,2 | |
| X | EP-A-0 125 834  (LUCAS) * Page 8, ligne 31 - page 10, ligne 28; figure 4 * | 1,2 | |
| A | DE-A-1 763 840  (ZDRUZENO) * Page 2, ligne 11 - page 3, ligne 10; figures 1,2 * | 1-3,5, 6 | DOMAINES TECHNIQUES RECHERCHES (Int Cl.4) H 02 K |
| A | US-A-4 162 419  (DeANGELIS) * Colonne 3, ligne 62 - colonne 4, ligne 13; figures 1,4 * | 1 | |
| A | DE-A-2 856 194  (ROBERT BOSCH) * Page 11, lignes 5-20; figure 5 * | 4,5 | |

-----

Le présent rapport de recherche a été établi pour toutes les revendications

| Lieu de la recherche | Date d'achèvement de la recherche | Examinateur |
|---|---|---|
| LA HAYE | 29-09-1986 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82